# EUROPÄISCHE PATENTSCHRIFT

(11) **EP 1 294 062 B1**
(45) Veröffentlichungstag und Bekanntmachung des Hinweises auf die Patenterteilung: **11.10.2006**
(21) Anmeldenummer: 02007959.6
(22) Anmeldetag: 10.04.2002
(51) Int. Cl.: H01R 43/28, H02G 1/12

(54) **Vorrichtung zur Entfernung einer Isolierstoffschicht von einem Flachbandleiter**
Device for removing an insulant layer from a ribbon conductor
Dispositif pour retirer une couche d'isolant d'un câble plat

(30) Priorität: 12.09.2001 DE 10145009
(43) Veröffentlichungstag der Anmeldung: 19.03.2003
(73) Patentinhaber: Bernhard Schäfer Werkzeug- u. Sondermaschinen GmbH, 76669 Bad Schönborn-La (DE)
(72) Erfinder: Haag, Werner, 68753 Waghäusel (DE); Woll, Matthias, 76684 Östringen (DE)
(74) Vertreter: Moldenhauer, Herbert

(56) Entgegenhaltungen:
- EP-A- 0 749 129
- DE-A1- 2 723 851
- US-A- 4 527 451

## Beschreibung

In der Technik werden mehr und mehr Flachbandleiter für unterschiedliche Aufgaben eingesetzt. Ein Problem bei den Flachbandleitern ist die sogenannte Abisolierung, mit der großflächige Verbindungen zwischen dem Flachbandleiter und einem Kontakt herzustellen sind. Um Stecker oder Masseanschlüsse am Flachbandleiter anbringen zu können, muss die Isolierung rückstandslos von den Leitern entfernt werden. Diese partielle und selektive Entfernung der Isolierschicht und des Klebers von dem Leiter ist wegen der geringen Abmessungen mit höchster Präzision durchzuführen.

### Stand der Technik

Für das einseitige Abisolieren wird ein prozesskontrolliertes Fräsen benutzt, welches jedoch relativ langsam ist. Auch werden Laser eingesetzt, die eine hohe Präzision ermöglichen, jedoch ebenfalls nur mit hohem Zeitaufwand durchführbar sind. Bekannt ist auch Ultraschall einzusetzen, welches jedoch nur ein beidseitiges Abisolieren ermöglicht.

Die Vorrichtung nach dem Oberbegriff ist aus der US-A- 4527451 bekannt. Sie dient zur Entfernung einer Isolierstoffschicht aus polymerem Werkstoff von der Oberseite mindestens eines in einem Flachbandleiter gehaltenen Signalleiters und umfasst eine Klemmeinrichtung zum unverrückbaren Andrücken des Flachbandleiters an eine im Wesentlichen eben ausgebildete Tragfläche sowie einen relativ zu dem Flachbandleiter verschiebbaren Messerblock, wobei der Messerblock parallel zu der Tragfläche verschiebar ist und wenigstens eine Schabschneide und wenigstens eine Trennschneide aufweist und wobei die Schabschneide parallel zur Tragfläche wirksam ist und die Trennschneide in einer gedachten, sich senkrecht dazu erstreckenden Schnittebene. Der Messerblock wird bei dieser Ausführung zunächst senkrecht in Richtung der Tragfläche in die Isolierstoffschicht abgesenkt und im Anschluss daran parallel zu der Tragfläche in Richtung des Endes des Flachbandleiters zurückgezogen, um die Isolierstoffschicht von dem Ende abzustreifen. Dazu is es allerdings erforderlich, zunächst einmal ein Ende an dem Flachbandleiter zu erzeugen.

Die selektive Entfernung der Isolierstoffschicht gelingt nur ungenau. Dies liegt daran, dass sich die Isolierstoffschicht beim Eindringen des Messerblocks, das senkrecht in Richtung der Tragfläche erfolgt, elastisch verformt. Der zu entfernende Teil der Isolierstoffschicht wird dadurch ungenau begrenzt. Eine ähnliche Funktionsweise mit ähnlichen Nachteilen hat die Vorrichtung nach der DE-A-2723851.

Aus der EP-A.0749129 ist ein speziell geformtes Flachkabel bekannt, dass mit Hilfe einer Zange abisolierbar ist, die die Isolierstoffschicht mit Messern durchtrennt, die senkrecht zur Längsrichtung des Flachkabels aufeinander zu bewegt werden.

### Darstellung der Erfindung

Der Erfindung liegt die Aufgabe zugrunde, eine neue Möglichkeit für die Abisolierung von Flachbandleitern zu schaffen, die mit einfachen Mitteln eine sehr genaue, selektive Entfernung der Isolierstoffschicht und des eingesetzten Klebers vom Signalleiter ermöglicht. Die Vorrichtung soll möglichst einfach in ihrem Aufbau und in ihrer Handhabung sein.

Diese Aufgabe wird erfindungsgemäß dadurch gelöst, dass der Messerblock quer zur Längsrichtung des Signalleiters über den Flachbandleiter geführt ist, so wie im Anspruch 1.

Bevorzugt werden die Schabschneiden und die Trennschneiden als gesonderte zu dem Messerblock zusammengefasste Schab- beziehungsweise Trennmesser ausgeführt. Die einzelnen Messer sind leichter herstellbar als ein kompakter Messerblock mit entsprechend geschliffenen Schneiden.

Die Trennmesser sind mit Schnittkanten versehen, die mit der Bewegungsrichtung einen Winkel von weniger als 90° einschließen. Der Winkel beträgt bevorzugt 75° bis 85°.

Günstig ist es, wenn das Schabmesser und / oder das Trennmesser mit keilförmig angeschärften Schnittkanten versehen sind.

Die Vorrichtung kann so ausgeführt werden, dass der Flachbandleiter beliebig viele Signalleiter haben kann. Der Messerblock wird quer zu den Signalleitern über den Flachbandleiter geführt und die einzelnen Signalleiter von ihrer Isolierstoffschicht befreit und zwar in einer vorgegebenen Breite, welche durch die Breite des Schabmessers bestimmt ist.

Durch die Anordnung des Schabmessers zwischen zwei Trennmessern wird eine sehr definierte Fläche an den Signalleitern abisoliert.

Die Trennmesser und das Schabmesser sind austauschbar im Messerblock gehalten, der seinerseits Justiermittel zu definierten Festlegung in einer Werkzeugaufnahme eines Antriebmittels aufweist. Die Justiermittel können aus zwei am Messerblock vorhandenen Stiften bestehen, die sich quer zur Bewegungsrichtung erstrecken. Das Antriebsmittel selbst kann manuell oder auch motorisch betätigbar sein.

### Kurzbeschreibung der Zeichnung

Anhand der beiliegenden Zeichnung wird die Erfindung nachstehend näher erläutert.

Es zeigt:
Fig. 1 einen Flachbandleiterabschnitt mit drei Signalleitern und abisolierten Fenstern,
Fig. 2 eine Vorrichtung in der perspektivischen Darstellung mit einem eingesetzten Messerblock,
Fig. 3 eine weitere Vorrichtung in Form einer Handzange zur Aufnahme des Messerblocks zur Abisolierung,
Fig. 4 das Schabmesser in der Seitenansicht, Frontansicht und Draufsicht,
Fig. 5 ein Trennmesser ebenfalls in der Seitenansicht, Frontansicht und Draufsicht,
Fig. 6 eine perspektivische Ansicht eines Schabmessers und eines Trennmessers durch Stifte zusammengefasst und,
Fig. 7 der Messerblock aus Schabmesser und zwei Trennmessern in der perspektivischen Darstellung.

### Ausführung der Erfindung

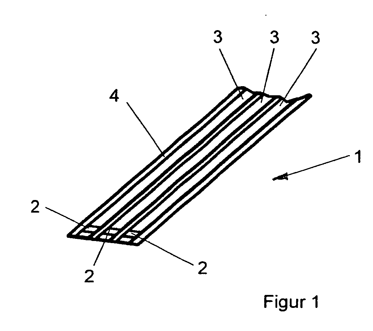

In der Fig. 1 ist in der perspektivischen Draufsicht ein Flachbandleiter 1 gezeigt, der aus drei Signalleitern 3 besteht, die mit einer Isolierstoffschicht 4 bedeckt sind. Der erfindungsgemäße Messerblock, der in den nachfolgenden Figuren behandelt wird, erlaubt ein Abisolieren der Isolierstoffschicht von den Signalleitern 3 an vorgegebenen Stellen, indem er quer über den Flachbandleiter 1 geführt wird. Es entstehen dann die Fenster 2, an denen die Flachbandleiter 3 von der Isolierstoffschicht und Klebstoffschicht befreit sind, so dass die Signalleiter 3 für weitere Anschlüsse zur Verfügung stehen.

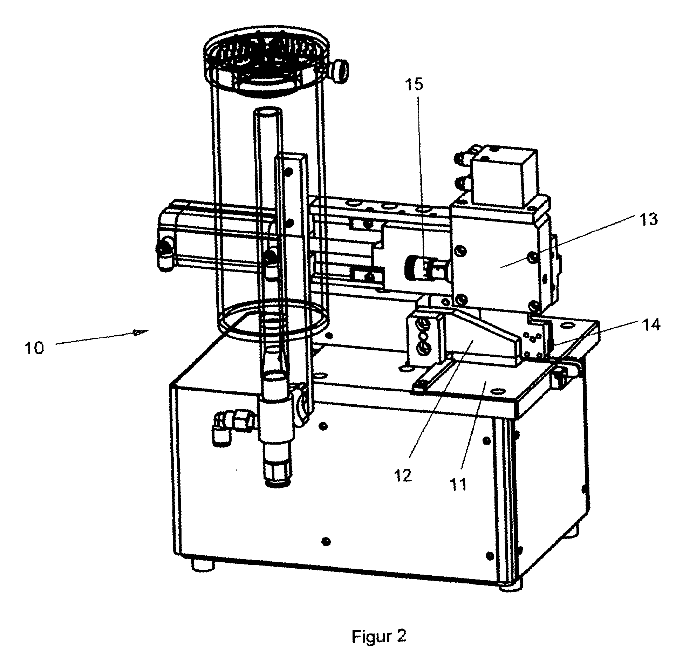

In der Fig. 2 ist eine Vorrichtung 10 gezeigt, die eine Tragfläche 11 hat, auf welcher der Flachbandleiter 1 aufliegt. Die Vorrichtung 10 ist mit einer Klemmeinrichtung 12 versehen, welche den Flachbandleiter, der hier nicht gezeigt ist, an der Tragfläche 11 andrückt und festhält. Im beweglichen Kopf 13 der Vorrichtung 10 wird der Messerblock 14 eingesetzt, der durch den Kopf 13 quer zu dem festgehaltenen Flachbandleiter 1 bewegt werden kann. Die Vorrichtung 10 ist mit Feinjustiermitteln 15 versehen, welche eine Feineinstellung des Messerblocks 14 in Bezug zum Flachbandleiter 1 ermöglichen. Außerdem hat die Vorrichtung 10 entsprechende Antriebsmotoren, welche die gewünschte Bewegung des Kopfes 13 ermöglichen.

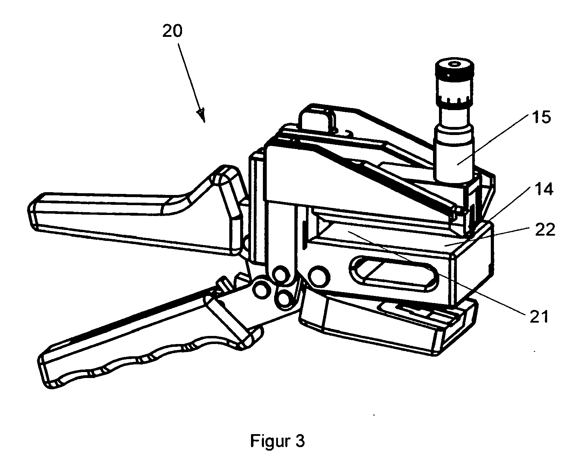

In der Fig. 3 ist eine mechanische Vorrichtung 20 gezeigt, die in Form einer Zange ausgebildet ist, und die allein durch das Schließen der Zange, die Klemmbewegung für den Flachbandleiter ausführt. Über eine Hebelmechanik wird nach dem Klemmen die entsprechende Bewegung des Messerblocks 14 quer zu dem in die Öffnung 21 eingeführten und in der Zeichnung nicht näher dargestellten Flachbandleiter ermöglicht. Die Tragfläche 22 stellt die ebene so Tragfläche für die Festklemmung des Flachbandleiters dar. Die Justiermittel 15 für die Feineinstellung des Abstands des Messerblocks 14 vom Flachbandleiter 1 sind auf der oberen Hälfte der Flachzange 20 angebracht.

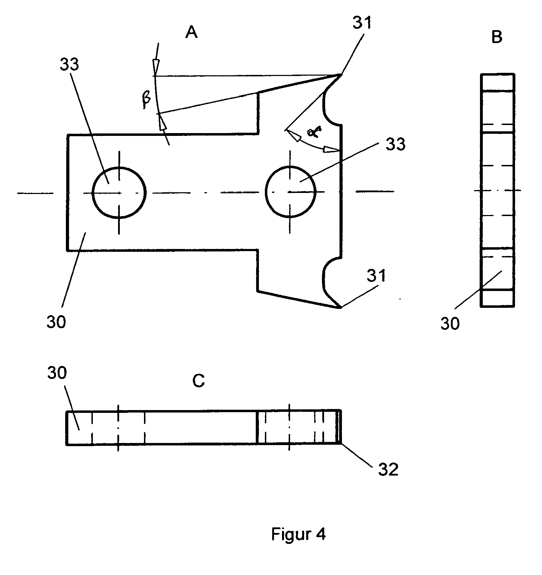

In der Fig. 4 ist das Schabmesser 30 dargestellt und zwar zeigt Fig. 4 A das 5 Schabmesser 30 in der Seitenansicht, die Fig. 4 B das Schabmesser 30 in der Frontansicht und Fig. 4 C das Schabmesser 30 in der Draufsicht. Das Schabmesser 30 hat zwei Schneidkanten 31, die keilförmig ausgebildet sind. Dabei ist der Winkel α, der quer zur Schneidrichtung liegt, größer als der Winkel β, welcher längs zur Schnittrichtung verläuft. Außerdem sind die 10 Schnittkanten 31 mit einer leichten Phase 32 versehen. Die beiden Bohrungen 33 sind für die Aufnahme der Stifte für das Zusammenfügen des Schabmessers 30 mit den seitlich angebrachten Trennmessern 40 und das Einsetzen des fertigen Messerblocks 14 in die dafür vorgesehene Vorrichtung 10 beziehungsweise 20 angebracht.

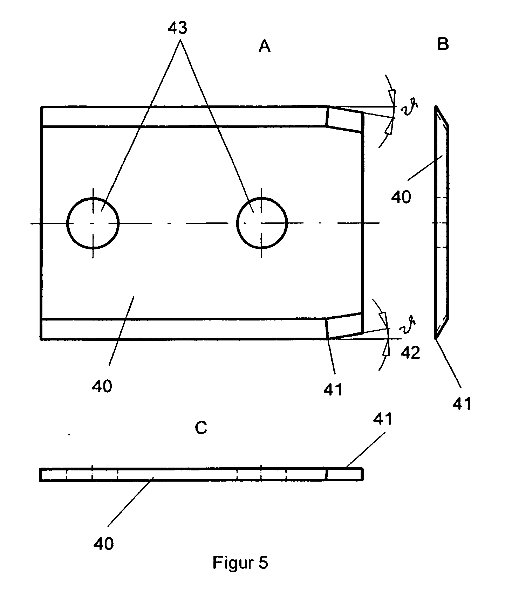

Die Fig. 5 zeigt die Ausbildung eines Trennmessers 40. Dabei zeigt die Fig. 5 A das Trennmesser 40 in der Seitenansicht, die Fig. 5 B das Trennmesser 40 in der Frontansicht und Fig. 5 C das Trennmesser 40 in der Draufsicht. Die Schnittkante 41 bildet mit der Bewegungsrichtung, die durch den Pfeil 42 angezeigt ist, einen Winkel δ, der kleiner ist als 90°. Bevorzugt beträgt dieser Winkel 75° bis 85°. Die Schnittkante 41 ist ebenfalls keilförmig ausgebildet, was aus der Fig. 5 B sichtbar wird. Die Bohrungen 43 stimmen mit den Bohrungen 33 im Schabmesser 30 überein.

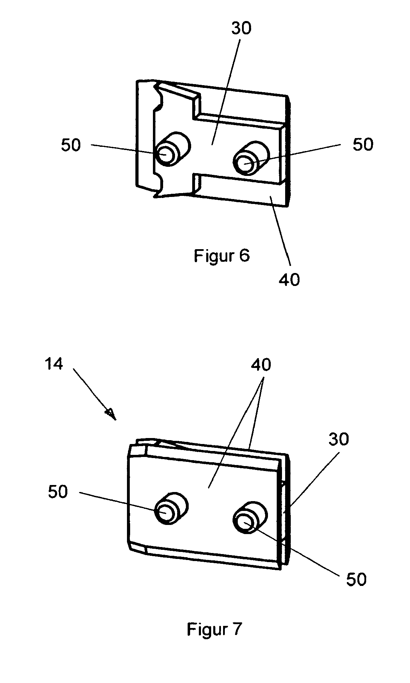

Die Fig. 6 zeigt in der perspektivischen Ansicht das Schabmesser 30 verbunden an der einen Seite mit einem Trennmesser 40. Die Verbindung erfolgt über die Stifte 50.

In der Fig. 7 ist auch das zweite Trennmesser 40 angefügt und von den Stiften so 50 gehalten. Das Schabmesser 30 ist zwischen den beiden Trennmessern 40 angeordnet. Dabei ist die Ausgestaltung von Schabmesser 30 und Trennmesser 40 so vorgenommen, dass die vom Trennmesser 40 erreichte Schnittebene einen größeren Abstand von dem Flachbandleiter 1 hat, als die Schnittebene des Schabmessers 30. Dieser Abstand beträgt lediglich 0,005 bis 0,03 mm, hat aber zur Folge, dass das Schabmesser 30 in einem eindeutig abgegrenzten Bereich den Schälvorgang vornimmt. Die Fig. 7 zeigt den vollständigen Messerblock 14.

## Patentansprüche

1. Vorrichtung (10, 20) zur Entfernung einer Isolierstoffschicht (4) aus polymerem Werkstoff von der Oberseite mindestens eines in einem Flachbandleiter (1) gehaltenen Signalleiters (3), umfassend eine Klemmeinrichtung (12) zum unverrückbaren Andrücken des Flachbandleiters (1) an eine im Wesentlichen eben ausgebildete Tragfläche (11) sowie einen quer zu dem Flachbandleiter (1) und parallel zu der Tragfläche (11) verschiebbaren Messerblock (14), der wenigstens eine Schabschneide (31) sowie wenigstens eine Trennschneide (41) aufweist, wobei die Schabschneide (31) parallel zur Tragfläche (11) angeordnet ist, **dadurch gekennzeichnet, dass** die Trennschneide (41) senkrecht zu der Tragfläche (11) und zugleich quer zu dem Signaleiter (3) angeordnet ist und dass der Messerblock (14) zum Ausschälen eines Fensters (2) aus der Isolierstoffschicht nur zugleich quer zu den Signalleitern (3) und parallel zu der Tragfläche (11) über den Flachbandleiter (1) führbar ist.

2. Vorrichtung nach Anspruch 1, **dadurch gekennzeichnet, dass** die Schabschneide (31) und die Trennschneide (41) Bestandteile von gesonderten, zu dem Messerblock (14) zusammengefassten Schabbeziehungsweise Trennmessern (30, 40) sind.

3. Vorrichtung nach Anspruch 2, **dadurch gekennzeichnet, dass** das Trennmesser (40) eine Trennschneide (41) aufweist, die mit seiner Bewegungsrichtung (42) einen Winkel δ von weniger als 90° einschließt.

4. Vorrichtung nach Anspruch 3, **dadurch gekennzeichnet, dass** der Winkel δ 75° bis 85° beträgt.

5. Vorrichtung nach einem der Ansprüche 2 bis 4, **dadurch gekennzeichnet, dass** das Schabmesser (30) und / oder das Trennmesser (40) eine keilförmig angeschärfte Schnittkante (31) haben.

6. Vorrichtung nach einem der Ansprüche 2 bis 5, **dadurch gekennzeichnet, dass** das Trennmesser (40) einen größeren Abstand von der Tragfläche (11) hat als das Schabmesser (30).

7. Vorrichtung nach einem der Ansprüche 2 bis 6, **dadurch gekennzeichnet, dass** das Schabmesser (30) zwischen zwei Trennmessern (40) angeordnet ist.

8. Vorrichtung nach einem der Ansprüche 2 bis 7, **dadurch gekennzeichnet, dass** die Trennmesser (40) und das Schabmesser (30) austauschbar im Messerblock (14) gehalten sind.

9. Vorrichtung nach einem der Ansprüche 1 bis 8, **dadurch gekennzeichnet, dass** die Vorrichtung (10) Justiermittel (15) zur definierten Festlegung des Messerblocks (14) in einer Werkzeugaufnahme eines Antriebmittels aufweist.

10. Vorrichtung nach einem der Ansprüche 1 bis 9, **dadurch gekennzeichnet, dass** der Messerblock (14) zumindest zwei Stifte (50) hat, die sich quer zur Bewegungsrichtung erstrecken.

## Claims

1. A device (10, 20) for removing an insulant layer (4) of polymeric material from the upper side of at least one signal conductor (3) held in a ribbon conductor (1), comprising a clamping device (12) for pressing the ribbon conductor (1) immovably against a substantially planar supporting surface (11) and also a cutter block (14), which is displaceable transversely to the ribbon conductor (1) and parallel to the supporting surface (11) and has at least one scraping blade (31) and at least one separating blade (41), the scraping blade (31) being arranged parallel to the supporting surface (11), **characterized in that** the separating blade (41) is arranged perpendicularly to the supporting surface (11) and at the same time transversely to the signal conductor (3) and **in that**, for the cutting out of a window (2) from the insulant layer, the cutter block (14) can only be simultaneously guided transversely to the signal conductors (3) and parallel to the supporting surface (11) over the ribbon conductor (1).

2. A device according to claim 1, **characterized in that** the scraping blade (31) and the separating blade (41) are component parts of separate scraping and separating cutters (30, 40) that are combined to form the cutter block (14).

3. A device according to claim 2, **characterized in that** the separating cutter (40) has a separating blade (41), which with its direction of movement (42) forms an angle δ of less than 90°.

4. A device according to claim 3, **characterized in that** the angle δ is from 75° to 85°.

5. A device according to any one of claims 2 to 4, **characterized in that** the scraping cutter (30) and/or the separating cutter (40) have a cutting edge (31) sharpened in the form of a wedge.

6. A device according to any one of claims 2 to 5, **characterized in that** the separating cutter (40) is at a greater distance from the supporting surface (11) than the scraping cutter (30).

7. A device according to any one of claims 2 to 6, **characterized in that** the scraping cutter (30) is arranged between two separating cutters (40).

8. A device as claimed in any one of claims 2 to 7, **characterized in that** the separating cutters (40) and the scraping cutter (30) are exchangeably held in the cutter block (14).

9. A device, according to any one of claims 1 to 8, **characterized in that** the device (10) has adjusting means (15) for the defined fixing of the cutter block (14) in a tool holder of a drive means.

10. A device according to any one of claims 1 to 9, **characterized in that** the cutter block (14) has at least two pins (50), which extend transversely to the direction of movement.

## Revendications

1. Dispositif (10, 20) pour retirer une couche d'isolant (4) en matériau polymère de la face supérieure d'au moins un conducteur de signaux (3) tenu dans un câble plat (1), comprenant un dispositif de serrage (12) pour serrer le câble plat (1), de manière fixe, contre une surface d'appui (11) essentiellement plane, ainsi qu'un bloc de couteaux (14) déplaçable perpendiculairement au câble plat (1) et parallèlement à la surface d'appui (11) et qui comprend au moins une lame racleuse (31) et au moins une lame tranchante (41), la lame racleuse (31) étant disposée parallèlement à la surface d'appui (11), **caractérisé en ce que** la lame tranchante (41) est disposée verticalement à la surface d'appui (11) et en même temps perpendiculairement au conducteur de signaux (3) et **en ce que** le bloc de couteaux (14) destiné à découper une fenêtre (2) dans la couche d'isolant ne peut être conduit sur le câble plat (1) que perpendiculairement aux conducteurs de signaux (3) et en même temps parallèlement à la surface d'appui (11).

2. Dispositif selon la revendication 1, **caractérisé en ce que** la lame racleuse (31) et la lame tranchante (41) font partie respectivement de couteaux racleurs et de couteaux tranchants (30, 40) séparés, réunis en ledit bloc de couteaux (14).

3. Dispositif selon la revendication 2, **caractérisé en ce que** le couteau tranchant (40) présente une lame tranchante (41) qui enferme avec son sens de mouvement (42) un angle δ inférieur à 90°.

4. Dispositif selon la revendication 3, **caractérisé en ce que** l'angle δ est compris entre 75° et 85°.

5. Dispositif selon l'une des revendications 2 à 4, **caractérisé en ce que** le couteau racleur (30) et/ou le couteau tranchant (40) ont une arête de coupe (31) affûtée en forme de coin.

6. Dispositif selon l'une des revendications 2 à 5, **caractérisé en ce que** le couteau tranchant (40) a une distance supérieure de la surface d'appui (11) que le couteau racleur (30).

7. Dispositif selon l'une des revendications 2 à 6, **caractérisé en ce que** le couteau racleur (30) est disposé entre deux couteaux tranchants (40).

8. Dispositif selon l'une des revendications 2 à 7, **caractérisé en ce que** les couteaux tranchants (40) et le couteau racleur (30) sont tenus de manière échangeable dans le bloc de couteaux (14).

9. Dispositif selon l'une des revendications 1 à 8, **caractérisé en ce que** le dispositif (10) comprend des moyens d'ajustage (15) pour le blocage défini du bloc de couteaux (14) dans un logement d'outil d'un moyen d'entraînement.

10. Dispositif selon l'une des revendications 1 à 9, **caractérisé en ce que** le bloc de couteaux (14) a au moins deux broches (50) qui s'étendent perpendiculairement au sens de mouvement.
